# EUROPÄISCHE PATENTSCHRIFT

(11) **EP 0 816 407 B1**
(45) Veröffentlichungstag und Bekanntmachung des Hinweises auf die Patenterteilung: **24.11.1999**
(21) Anmeldenummer: 97109743.1
(22) Anmeldetag: 16.06.1997
(51) Int. Cl.: C08G 18/10

(54) **Verfahren zur kontinuierlichen Herstellung von thermoplastisch verarbeitbaren Polyurethanen mit verbessertem Verarbeitungsverhalten**
Process for continuous manufacture of thermoplastic polyrethanes of improved processability
Procédé en continu pour la preparation de polyuréthanes thermoplastiques avec processabilité améliorée

(30) Priorität: 28.06.1996 DE 19625987
(43) Veröffentlichungstag der Anmeldung: 07.01.1998
(73) Patentinhaber: BAYER AG, 51368 Leverkusen (DE)
(72) Erfinder: Müller, Friedemann, Dr., 41470 Neuss (DE); Bräuer, Wolfgang, Dr., 51375 Leverkusen (DE); Heidingsfeld, Herbert, Dipl.Ing., 50226 Frechen (DE); Röhrig, Wolfgang, 51467 Bergisch Gladbach (DE); Hoppe, Hans-Georg, Dipl.Ing., 42799 Leichlingen (DE); Winkler, Jürgen, Dipl.Ing., 40764 Langenfeld (DE)

(56) Entgegenhaltungen:
- EP-A- 0 230 662
- EP-A- 0 571 830
- EP-A- 0 598 283
- US-A- 4 190 711

## Beschreibung

Die Erfindung betrifft ein mehrstufiges Verfahren zur kontinuierlichen Herstellung von thermoplastisch verarbeitbaren Polyurethanen mit verbessertem Verarbeitungsverhalten durch Weichsegmentvorverläntgerung.

Thermoplastische Polyurethan-Elastomere sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU's, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 70 Shore A bis 75 Shore D.

Die TPU's können kontinuierlich oder diskontinuierlich hergestellt werden. Die bekanntesten technischen Herstellverfahren sind das Bandverfahren (GB 1 057 018) und das Extruderverfahren (DE 1 964 834 und 2 059 570) .

Zur Verbesserung des Verarbeitungsverhaltens ist bei Spritzgießartikeln eine schnelle Entformbarkeit und bei Extrusionsprodukten eine erhöhte Schmelze-, Schlauch- und Profil-Standfestigkeit bei leichtem Aufschmelzen des TPU's von großem Interesse. Die Morphologie der TPU's, d.h. das spezielle Rekristallisationsverhalten, ist für das Entformungsverhalten und die Standfestigkeit von ausschlaggebender Bedeutung.

Die für ein verbessertes Verarbeitungsverhalten geeignete Morphologie wird bei den Produkten, die nach üblichen Verfahren hergestellt werden, erst bei hohen Hartsegmentanteilen (Kettenverlängerer + Diisocyanat) erreicht. Dadurch wird die Beweglichkeit des Weichsegmentes (Polyol + Diisocyanat) so eingeschränkt, daß die Kälteflexibilität und das Fließverhalten verschlechtert werden. Außerdem erhöht man ja gleichzeitig den Härtegrad des Produktes.

Die Veränderung der Morphologie durch Erhöhung des Molgewichtes des Polyols führt zu einer stärkeren Phasenentmischung und verbesserten mechanischen Werten, aber durch die gleichzeitige Herabsetzung des Hartsegmentanteils zu einer deutlichen Verminderung der Härte (Seefried u.a., J.Appl. Pol. Sci. 19, 2493, 1975). Von einem verbesserten Rekristallisationsverhalten wird deshalb nicht berichtet.

Bei einer festgelegten Rezeptur tritt auch eine graduelle Morphologiebeeinflussung bei einer geänderten Dosierreihenfolge der Aufbaukomponenten auf. In der Vergangenheit wurde vor allem der Weg des Weichsegmentprepolymers beschritten. In der häufigsten Variante wird dabei das Polyol mit der gesamten Menge an Diisocyanat umgesetzt. Die Kettenverlängerung mit dem niedermolekularen Diol erfolgt in einer zweiten Stufe. Der wichtigste Grund ist der Ausgleich der Reaktivitäten von Polyol und Kettenverlängerer zur besseren Wärmeabfuhr. Zuerst wird die PU-Reaktion mit dem weniger reaktiven Polyol durchgeführt, danach die Reaktion mit dem aktiveren kurzkettigen Diol. Aufgrund des hohen molaren Überschusses von Diisocyanat in der Prepolymerstufe wird eine Verlängerung der Polyole nur im untergeordneten Umfang festgestellt. Morphologisch erfolgt eine stärkere Phasenentmischung, die zu einer Anhebung der mechanischen Eigenschaften führt (Wilkes u.a., J.Appl. Pol. Sci. 29, 2695, 1984). Von einem verbesserten Rekristallisationsvermögen wird deshalb nicht berichtet.

Meisert u.a. (DE 2 248 382) beschreiben ein anderes Weichsegment-Prepolymerverfahren. Durch die Reaktion eines Überschusses von Polyol mit Diisocyanat wird ein OH-terminiertes Prepolymer erzeugt, das im Folgeschritt mit dem Kettenverlängerer und mit einem vom 1. Schritt verschiedenen Diisocyanat umgesetzt wird. Die Erfinder erreichen damit eine Verbreiterung des Aufschmelzbereiches und in der Folge homogenere Folien als bei der üblichen Einschrittreaktion. Eine Verbesserung des Rekristallisationsvermögens wurde auch bei diesen Beispielen nicht beobachtet.

In der EP 0 571 830 wird beschrieben, wie man in einem einfachen Batch-Verfahren durch Umsetzung von 1 mol Polyol mit 1.1 bis 5.0 mol Diisocyanat, Einmischen des restlichen Diisocyanates und anschließender Kettenverlängerung ein TPU mit einer gegenüber den Standardverfahren erhöhten Rekristallisationstemperatur erhält. Die so erhaltenen Produkte ergeben aber aufgrund des Herstellverfahren stippige Folien und sind damit nicht für die Extrusionsverarbeitung geeignet.

Nachteilig für die Verarbeitung sind ebenfalls die erhöhten Aufschmelztemperaturen, insbesondere in dem in den Beispielen beschriebenen Diisocyanat/Polyol-Verhältnis von 1.5 bis 2.0.

Die Aufgabe der Verbesserung der TPU-Verarbeitung durch eine Steigerung des Rekristallisationsvermögens bei gleichzeitig gutem Aufschmelzverhalten bei weitgehend gleichbleibendem Härtebereich und Kälteverhalten ist also bisher noch nicht befriedigend gelöst.

Es wurde nun gefunden, daß sich die oben beschriebene Anforderung durch die genaue Einhaltung eines neuen Herstellverfahren der Weichsegmentvorverlängerung erfüllen läßt.

Gegenstand der Erfindung ist somit ein Verfahren zur kontinuierlichen Herstellung von thermoplastisch verarbeitbaren Polyurethanen mit verbessertem Verarbeitungsverhalten, dadurch gekennzeichnet, daß man in einer mehrstufigen Umsetzung
A) eine oder mehrere lineare hydroxylterminierte Polyole a) mit einem Molgewicht von 500 bis 5000 mit einem Teil eines organischen Diisocyanates b) in einem NCO:OH-Verhältnis von 2.0 : 1 bis 5.0 : 1 kontinuierlich in einem Mischaggregat mit hoher Scherenergie mischt,
B) die in Stufe A) hergestellte Mischung kontinuierlich in einem Reaktor bei Temperaturen > 120°C bis zu einem Umsatz von > 90% bezogen auf die Komponente a) zu einem isocyanat-terminierten Prepolymer umsetzt,
C) das in Stufe B) hergestellte Prepolymer mit dem Rest der Komponente b) mischt , wobei insgesamt in den Stufen A) bis C) ein NCO:OH-Verhältnis von 2.05 : 1 bis 6 :1 und unter Hinzuziehung sämtlicher Komponenten der Stufen A) bis F) ein NCO:OH-Verhältnis von 0.9 bis 1.1 eingestellt wird,
D) die in Stufe C) hergestellte Mischung auf eine Temperatur < 190°C abkühlt,
E) die in Stufe D) erhaltene Mischung kontinuierlich mit einem oder mehreren Diol- und gegebenenfalls Triol- und/oder Diamin-Kettenverlängerern c) mit einem Molgewicht von 60 bis 500 intensiv in maximal 5 Sekunden mischt und ,
F) die in Stufe E) erhaltene Mischung kontinuierlich in einem von der Stufe B) verschiedenen Reaktor zum thermoplastischen Polyurethan umsetzt.

Als organische Diisocyanate b) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 % (berechnet auf Gesamt-Diisocyanat), aber höchstens soviel eines Polyisocyanates, daß ein thermoplastisch verarbeitbares Produkt entsteht, verwendet werden. Beispiele sind Triphenylmethan-4,4',4"-triisocyanat und Polyphenyl-polymethylen-polyisocyanate.

Als Komponente a) werden lineare hydroxylterminierte Polyole mit einem Molekulargewicht von 500 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.% bezogen auf die bifunktionellen Polyether eingesetzt werden, jedoch höchstens in solcher Menge, daß ein thermoplastisch verarbeitbares Produkt entsteht. Die im wesentlichen linearen Polyether-Diole besitzen vorzugsweise Molekulargewichte von 500 bis 5000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol und/oder 1,6-Hexandiol, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen. Als Polyester-Diole vorzugsweise verwendet werden Ethandiol-polyadipate, 1,4-Butandiol-polyadipate, Ethandiol- 1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen Molekulargewichte von 500 bis 5000 und können einzeln oder in Form von Mischungen untereinander zur Anwendung kommen.

Als Kettenverlängerungsmittel c) werden Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxylethyl)-hydrochinon, ethoxylierte Bisphenole, wie z.B. 1,4-Di(β-hydroxyethyl)-bisphenol A, (cyclo)aliphatische Diamine, wie z.B. Isophorondiamin, Ethylendiamin, 1,2- Propylendiamin, 1,3-Propylen-diamin, N-Methyl-propylen-1,3-diamin, N,N'-Dimethylethylendiamin und aromatische Diamine, wie z.B. 2,4-Toluylen-diamin und 2,6-Toluylen-diamin, 3,5-Diethyl-2,4-toluylen-diamin und/oder 3,5-Diethyl -2,6-toluylen-diamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPU's können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0.9:1.0 bis 1.1:1.0, vorzugsweise 0.95:1.0 bis 1.10:1.0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben den TPU-Komponenten und den Katalysatoren können auch Hilfsmittel und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPU's verwendet werden. Weiterhin zur Einarbeitung geeignet sind handelsübliche Weichmacher wie Phosphate, Phthalate, Adipate, Sebacate und Alkylsulfonsäureester.

Das erfindungsgemäße kontinuierliche Herstellverfahren wird wie folgt ausgeführt:

Die Mengen an den Reaktionskomponenten zur Prepolymerbildung der Stufe A) werden erfindungsgemäß so gewählt, daß das NCO/OH-Verhältnis der Teilmenge von Diisocyanat b) und Polyol a) 2.0. : 1 bis 5.0 : 1 , bevorzugt 2.05 : 1 bis 3.0 : 1 beträgt. Die Komponenten werden kontinuierlich in einem Aggregat mit hoher Scherenergie gemischt. Beispielsweise können ein Mischkopf, vorzugsweise ein hochtouriger Stachelmischer, oder eine Düse verwendet werden.

Die Prepolymerreaktion der Stufe B) wird kontinuierlich in einem Reaktor, beispielsweise einem Rohr, durchgeführt. Bevorzugt werden ein Rohr mit Statikmischern oder ein gerührtes Rohr (Rohrmischer) mit einem Länge/Durchmesser-Verhältnis größer 4 : 1.

In einer besonders bevorzugten Form werden die Stufen A) und B) in den Apparaten Düse/Rohr mit Statikmischern oder im Rohrmischer durchgeführt.

Die Prepolymerreaktion der Stufe B) sollte erfindungsgemäß im wesentlichen zum vollständigen Umsatz, d.h. mehr als 90 Mol-% bez. Polyol, gebracht werden. Die Reaktionstemperaturen liegen oberhalb von 120°C, bevorzugt zwischen 140° und 220°C.

In der Stufe C) wird kontinuierlich die Teilmenge 2 des Diisocyanates a) schnell eingemischt. Bevorzugt werden dazu ein oder mehrere Statikmischer in einem Rohr verwendet. Es können aber auch eine Düse, ein Mischkopf oder die Mischelemente eines Extruders eingesetzt werden.

Die in C) hergestellte Mischung wird in Stufe D) auf eine Temperatur unterhalb von 190°C, bevorzugt unter 170°C, abgekühlt. Geeignet dafür sind wiederum ein gegebenenfalls gekühltes Rohr oder der mit Förderelementen ausgestattete gekühlte Teil eines Extruders. Bevorzugt wird die Kühlung in einem von außen gekühlten Zweiwellenextruder.

In der Stufe E) wird der Kettenverlängerer c) in weniger als 5 Sekunden in die gekühlte Prepolymermischung eingemischt. Auch für diese Stufe wird ein mit hoher Scherenergie arbeitendes Mischaggregat bevorzugt. Beispielhaft seien ein Mischkopf, eine Düse oder ein hochtouriger Schneckenextruder mit geringem Mischvolumen genannt. Bevorzugt wird die intensive Mischung durch die Mischelemente eines Extruders durchgeführt.

In der Stufe F) wird in einem von der Stufe B) verschiedenen Reaktor die Reaktionsmischung kontinuierlich zum thermoplastischen Polyurethan umgesetzt. Geeignet dazu sind insbesondere Hochviskosreaktoren. Als Beispiele seien kontinuierlich arbeitende Kneter und Extruder, wie z.B. Busskneter, Einwellen- und Zweiwellenextruder genannt. Bevorzugt sind Zweiwellenextruder. Die Reaktionstemperaturen liegen bei 140° bis 240°C.

Das nach der erfindungsgemäßen Verfahren hergestellte TPU kann zu Spritzgießartikel, zu Folien, zu Beschichtungsmassen oder zu Fasern verarbeitet werden. Bei Spritzgießanwendungen zeichnet es sich bei niedriger Aufschmelztemperatur durch eine stark verbesserte Entformbarkeit aus, was dem Spritzgießverarbeiter eine verkürzte Taktzeit ermöglicht. Bei Extrusionsprodukten resultiert aus dem erfindungsgemäß hergestellten TPU neben dem hervorragenden Aufschmelzverhalten eine verbesserte Standfestigkeit des Folienschlauches und eine Folie mit hoher Homogenität.

In den folgenden Beispielen werden als Maß für die oben beschriebene erfindungsgemäße Morphologieveränderung die Ergebnisse von DSC-Messungen (differential scanning calorimetry) angegeben. Dabei korreliert die Kristallisationstemperatur T_{C} mit dem Rekristallisationsvermögen (C.S. Schollenberger, Abstr. Pap. Am. Chem. Soc.. 1979, 83; J.Foks u.a., Eur. Pol. J. 25, 31).

Die DSC-Messungen wurden an einem DSC-7 der Firma Perkin Elmer durchgeführt. Das TPU-Produkt wird im Stickstoff-Medium von -70°C bis 260°C mit 20°C/min aufgeheizt, danach mit 40°C/min auf -70°C abgekühlt. In der Abkühlphase stellt der exotherme Peak die Rekristallisation dar.

### Beispiele 1 bis 9

In der Tabelle wird die Erfindung anhand einiger Beispiele verdeutlicht. Die verwendeten Herstellverfahren sind nachstehend beschrieben.

### TPU-Herstellverfahren-Verfahren 1

### (nicht erfindungsgemäßes Prepolymerverfahren) :

Das Polyol, in dem 150 ppm (bez. Polyol) Zinndioctoat als Katalysator gelöst waren, wurde auf 140°C erhitzt und kontinuierlich in das erste Gehäuse einer ZSK 83 (Firma Werner/Pfleiderer) dosiert. In das gleiche Gehäuse wurde die gesamte Menge 4,4'-Diphenylmethandiisocyanat (60°C) dosiert. In das Gehäuse 7 förderte man kontinuierlich Butandiol-1,4 . Die 13 Gehäuse der ZSK waren von 140° bis 240°C aufsteigend beheizt. Die Drehzahl der Schnecke betrug 300 U/min. Die Dosiergeschwindigkeit stellte man so ein, daß die Verweilzeit der Reaktionskomponenten in der ZSK ca. 1 Minute betrug.

Am Ende der Schnecke wurde die heiße Schmelze als Strang abgezogen, im Wasserbad gekühlt und granuliert.

### TPU-Herstellverfahren-Verfahren 2

### (Weichsegmentvorverlängerung) :

Das Polyol, in dem 150 ppm (bez. Polyol) Zinndioctoat als Katalysator gelöst waren, wurde auf 150°C erhitzt und kontinuierlich in einen mit 1500 U/min gerührten Rohrmischer dosiert. Gleichzeitig pumpte man die Teilmenge 1 an 4,4'-Diphenylmethandiisocyanat (60°C) in den Rohrmischer. Der Rohrmischer hatte ein Länge/Durchmesser-Verhältnis von 8:1 . Das im Rohrmischer entstandene Prepolymer war in ca. 1 Minute zu 99 Mol-% , bezogen auf den Polyester, umgesetzt.

Durch einen Statikmischer (Firma Sulzer) wurde die Teilmenge 2 des 4,4'-Diphenylmethandiisocyanates innerhalb von 5 Sekunden in das Prepolymer eingemischt.

Die Reaktionsmischung wurde in das Gehäuse 1 der ZSK 83 dosiert und dort durch die folgenden Gehäuse auf ca. 140°C gekühlt.

In das Gehäuse 5 dosierte man das Butandiol-1,4 , das durch ein kurzes intensiv mischendes Mischelement unter Gehäuse 6 in das Prepolymer eingemischt wurde.

In dem letzten Teil der Schnecke wurden die Reaktionskomponenten zum TPU umgesetzt. Die Reaktionstemperaturen lagen bei 150 bis 220°C. Die Drehzahl der Schnecke betrug 300 U/min.

Am Ende der Schnecke wurde die heiße Schmelze als Strang abgezogen, im Wasserbad gekühlt und granuliert.

### TPU-Herstellverfahren -Verfahren 3

### (Weichsegmentvorverlängerung) :

Dieses Verfahren wurde analog Verfahren 2 durchgeführt. Die Prepolymerkomponentenmischung und Bildung wurde aber nicht im Rohrmischer, sondern in der Apparatekombination Düse / Rohr mit Statikmischer (Firma Sulzer) unter sonst gleichen Bedingungen durchgeführt.

### Blasfolienherstellung

Das TPU-Granulat wird in einem Einwellen-Extruder 30/25D Plasticorder PL 2000-6 der Firma Brabender aufgeschmolzen (Dosierung 3 kg/h ; 185-205°C) und durch einen Folienblaskopf zu einer Schlauchfolie extrudiert.

### Herstellung der Spritzgießkörper

Das TPU-Granulat wird in einer Spritzgießmaschine D 60 (32er Schnecke) der Firma Mannesmann aufgeschmolzen (Massetemperatur ca. 225°C) und zu Stäben geformt (Formtemperatur 40°C ; Stabgröße : 80x10x4 mm).

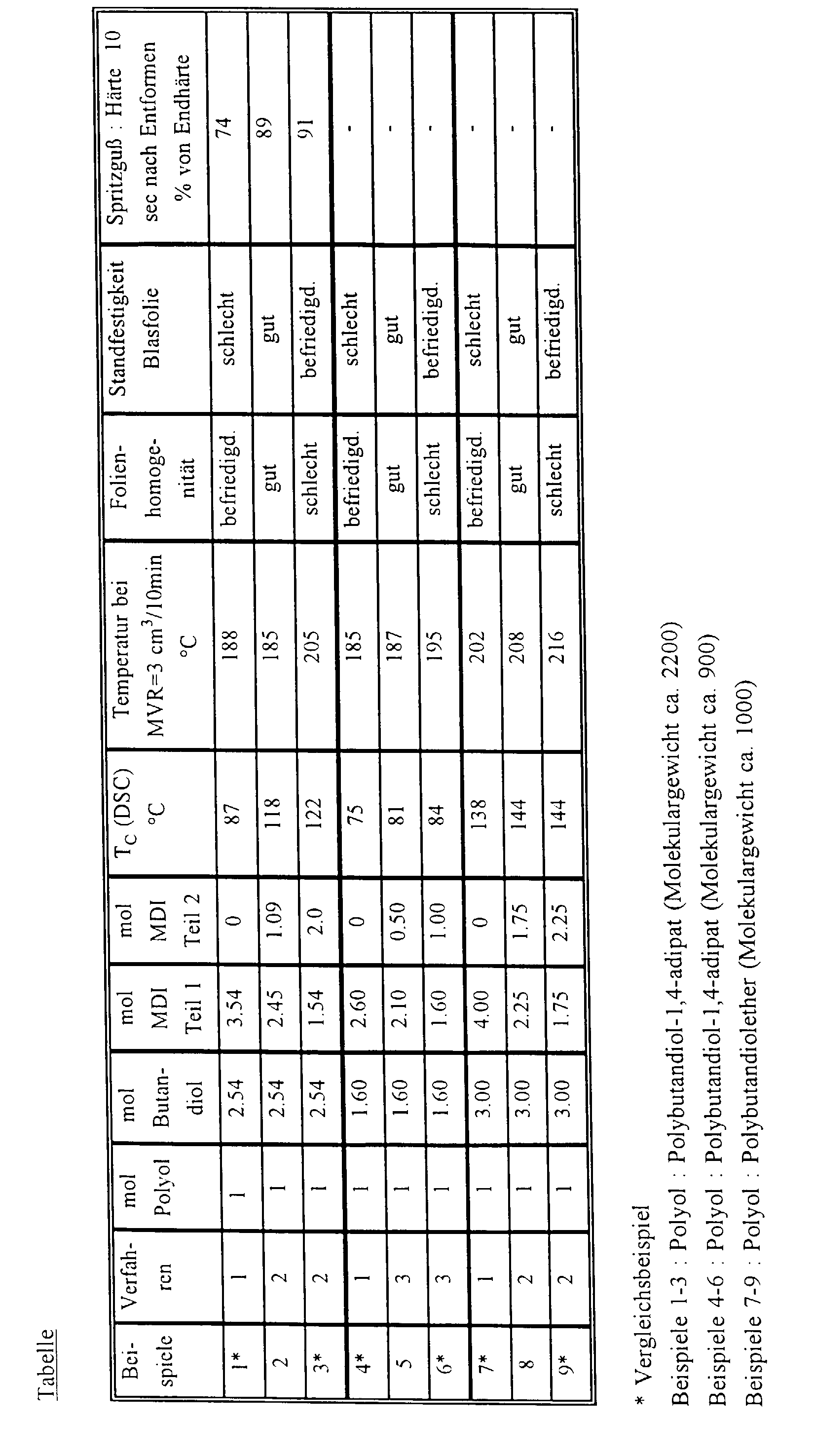

Die erfindungsgemäßen Beispiele der Weichsegmentvorverlängerung mit einem NCO/OH-Verhältnis von größer als 2.0 zeigen im Vergleich zum normalen Prepolymerverfahren einen deutlichen Anstieg der Rekristallisationstemperaturen. Dieser ist die Ursache für eine schnellere Aushärtung von Spritzgießkörpern und eine verbesserte Folienstandfestigkeit. Das erfindungsgemäße Herstellverfahren führt zu einer besseren Folienhomogenität.

Die Weichsegmentvorverlängerung mit einem NCO/OH-Verhältnis von kleiner als 2.0 erhöht die Aufschmelztemperatur derart, daß sowohl die Folienhomogenität als auch die Standfestigkeit aufgrund von Extruder-Druckschwankungen wieder verschlechtert werden.

## Patentansprüche

1. Verfahren zur kontinuierlichen Herstellung von thermoplastisch verarbeitbaren Polyurethanen mit verbessertem Verarbeitungsverhalten, dadurch gekennzeichnet, daß man in einer mehrstufigen Umsetzung
A) eine oder mehrere lineare hydroxylterminierte Polyole a) mit einem Molgewicht von 500 bis 5000 mit einem Teil eines organischen Diisocyanates b) in einem NCO:OH-Verhältnis von 2.0 : 1 bis 5.0 : 1 kontinuierlich in einem Mischaggregat mit hoher Scherenergie mischt,
B) die in Stufe A) hergestellte Mischung kontinuierlich in einem Reaktor bei Temperaturen > 120°C bis zu einem Umsatz von > 90% bezogen auf die Komponente a) zu einem isocyanat-terminierten Prepolymer umsetzt,
C) das in Stufe B) hergestellte Prepolymer mit dem Rest der Komponente b) mischt, wobei insgesamt in den Stufen A) bis C) ein NCO:OH-Verhältnis von 2.05 : 1 bis 6 :1 und unter unter Hinzuziehung sämtlicher Komponenten der Stufen A) bis F) ein NCO:OH-Verhältnis von 0.9 bis 1.1 eingestellt wird,
D) die in Stufe C) hergestellte Mischung auf eine Temperatur < 190°C abkühlt,
E) die in Stufe D) erhaltene Mischung kontinuierlich mit einem oder mehreren Diol- und gegebenenfalls Triol- und/oder Diamin-Kettenverlängerern c) mit einem Molgewicht von 60 bis 500 intensiv in maximal 5 Sekunden mischt und ,
F) die in Stufe E) erhaltene Mischung kontinuierlich in einem von der Stufe B) verschiedenen Reaktor zum thermoplastischen Polyurethan umsetzt.

2. Verfahren zur kontinuierlichen Herstellung von thermoplastisch verarbeitbaren Polyurethanen gemäß Anspruch 1, dadurch gekennzeichnet, daß das Polyol a) Polyester, Polyether, Polycarbonat oder ein Gemisch aus diesen ist.

3. Verfahren zur kontinuierlichen Herstellung von thermoplastisch verarbeitbaren Polyurethanen gemäß Anspruch 1, dadurch gekennzeichnet, daß der Diol-Kettenverlängerer Ethylenglykol, Butandiol, Hexandiol, 1,4-Di-(β-hydroxylethyl)-hydrochinon, 1,4-Di-(β-Hydroxylethyl) bisphenol A ist.

4. Verfahren zur kontinuierlichen Herstellung von thermoplastisch verarbeitbaren Polyurethanen gemäß Anspruch 1, dadurch gekennzeichnet, daß das Diisocyanat ein Diphenylmethandiisocyanat-Isomerengemisch mit einem 4,4'-Diphenylmethandiisocyanatgehalt von größer 96 Gew.% und insbesondere 4,4'-Diphenylmethandiisocyanat ist.

5. Verfahren zur kontinuierlichen Herstellung von thermoplastisch verarbeitbaren Polyurethanen gemäß Anspruch 1) bis 4), dadurch gekennzeichnet, daß die Stufen A) und B) in einer Düse mit anschließenden Statikmischern oder in einem gerührtem Rohr mit einem Länge/Durchmesser-Verhältnis von > 4:1 durchgeführt werden.

6. Verfahren zur kontinuierlichen Herstellung von thermoplastisch verarbeitbaren Polyurethanen gemäß Anspruch 1) bis 5), dadurch gekennzeichnet, daß die Stufe C) in einen oder mehreren Statikmischern durchgeführt wird.

7. Verfahren zur kontinuierlichen Herstellung von thermoplastisch verarbeitbaren Polyurethanen gemäß Anspruch 1) bis 6), dadurch gekennzeichnet , daß die Stufen D), E) und F) in einem Zweiwellenextruder durchgeführt werden, bevorzugt die Stufe E) mit intensiv mischenden Schneckenelementen.

## Claims

1. Process for the continuous production of thermoplastically processable polyurethanes having improved processing behaviour, characterised in that, in a multistep reaction
A) one or more linear hydroxyl-terminated polyols a) having a molecular weight of from 500 to 5000 are mixed continuously with a proportion of an organic diisocyanate b) in an NCO:OH ratio of from 2.0:1 to 5.0:1, in a mixing unit at high shear energy,
B) the mixture prepared in step A) is reacted continuously to form an isocyanate-terminated prepolymer in a reactor at temperatures of > 120°C, until a conversion of > 90%, referred to component a), is achieved,
C) the prepolymer prepared in step B) is mixed with the remainder of component b), an NCO:OH ratio of from 2.05:1 to 6:1 being established overall in steps A) to C) and an NCO:OH ratio of 0.9 to 1.1 being established when all the components of steps A) to F) are included,
D) the mixture prepared in step C) is cooled to a temperature of < 190°C,
E) the mixture obtained in step D) is mixed continuously and intensively for a maximum of 5 seconds with one or more diol and optionally triol and/or diamine chain extenders c) having a molecular weight of from 60 to 500 and
F) the mixture obtained in step E) is reacted continuously in a different reactor from that used in step B), to form the thermoplastic polyurethane.

2. Process for the continuous production of thermoplastically processable polyurethanes according to claim 1, characterised in that the polyol a) is polyester, polyether, polycarbonate or a mixture of these.

3. Process for the continuous production of thermoplastically processable polyurethanes according to claim 1, characterised in that the diol chain extender is ethylene glycol, butanediol, hexanediol, 1,4-di(β-hydroxyethyl)hydroquinone, 1,4-di(β-hydroxyethyl)bisphenol A.

4. Process for the continuous production of thermoplastically processable polyurethanes according to claim 1, characterised in that the diisocyanate is a mixture of isomers of diphenylmethane diisocyanate having a content of 4,4'-diphenylmethane diisocyanate of more than 96 wt.% and in particular is 4,4'-diphenylmethane diisocyanate.

5. Process for the continuous production of thermoplastically processable polyurethanes according to claims 1) to 4), characterised in that steps A) and B) are carried out in a nozzle with connecting static mixers or in a stirred tube having a ratio of length to diameter of greater than 4:1.

6. Process for the continuous production of thermoplastically processable polyurethanes according to claims 1) to 5), characterised in that step C) is carried out in one or more static mixers.

7. Process for the continuous production of thermoplastically processable polyurethanes according to claims 1) to 6), characterised in that steps D), E) and F) are carried out in a twin-shaft extruder, preferably intensively mixing screw elements being used in step E).

## Revendications

1. Procédé pour la préparation en continu de polyuréthannes thermoplastiques dont l'aptitude au façonnage est améliorée, caractérisé en ce que, par une réaction en plusieurs étapes :
A) on mélange avec une énergie de cisaillement élevée, dans un ensemble de mélange, un ou plusieurs polyols linéaires à terminaison hydroxyle a), ayant un poids moléculaire allant de 500 à 5000, avec une partie d'un diisocyanaye organique b), en un rapport NCO:OH allant de 2,0:1 à 5,0:1 ;
B) on fait réagir le mélange préparé à l'étape A), en continu, dans un réacteur à des températures > 120°C jusqu'à une réaction de plus de 90% sur base du composant a), en un prépolymère à terminaison isocyanate ;
C) on mélange le prépolymère préparé à l'étape B) avec le reste du composant b), où au total des étapes A) à C), on ajuste un rapport NCO:OH allant de 2,05:1 à 6:1 et en étendant à tous les composants des étapes A) à F), un rapport NCO:OH allant de 0,9 à 1,1 ;
D) on refroidit le mélange préparé à l'étape C), à une température < 190°C ;
E) on mélange en continu, le mélange obtenu à l'étape D), avec un ou plusieurs extenseurs de chaîne diol et facultativement, triol et/ou diamine c), ayant un poids moléculaire allant de 60 à 500, de manière intensive pendant au maximum 5 secondes, et
F) on fait réagir le mélange obtenu à l'étape E), en continu, dans un réacteur différent de l'étape B), en polyuréthanne thermoplastique.

2. Procédé pour la préparation en continu de polyuréthannes thermoplastiques suivant la revendication 1, caractérisé en ce que le polyol a) est un polyester, polyéther, polycarbonate ou un mélange de ceux-ci.

3. Procédé pour la préparation en continu de polyuréthannes thermoplastiques suivant la revendication 1, caractérisé en ce que l'extenseur de chaîne diol est l'éthylèneglycol, le butanediol, l'hexanediol, la 1,4-di(β-hydroxyéthyl)hydroquinone, le 1,4-di(β-hydroxyéthyl)bisphénol A.

4. Procédé pour la préparation en continu de polyuréthannes thermoplastiques suivant la revendication 1, caractérisé en ce que le diisocyanate est un mélange des isomères du diphénylméthanediisocyanate avec une teneur en 4,4'-diphénylméthanediisocyanate supérieure à 96% en poids et en particulier, est le 4,4'-diphénylméthanediisocyanate.

5. Procédé pour la préparation en continu de polyuréthannes thermoplastiques suivant les revendications 1 à 4, caractérisé en ce que les étapes A) et B) sont réalisées dans une buse avec mélangeur statique final ou dans un tube agité avec un rapport longueur/diamètre supérieur à 4:1.

6. Procédé pour la préparation en continu de polyuréthannes thermoplastiques suivant les revendications 1 à 5, caractérisé en ce que l'étape C) est réalisée dans un ou plusieurs mélangeurs statiques.

7. Procédé pour la préparation en continu de polyuréthannes thermoplastiques suivant les revendications 1 à 6, caractérisé en ce que les étapes D), E) et F) sont réalisées dans une extrudeuse à vis double, de préférence l'étape E) avec des éléments de vis pour mélange intensif.
